# EUROPEAN PATENT SPECIFICATION

(11) **EP 4 172 010 B1**
(45) Date of publication and mention of the grant of the patent: **18.12.2024**
(21) Application number: 21726689.9
(22) Date of filing: 26.05.2021
(51) Int. Cl.: B60T 7/04, B60T 7/16, B60T 8/32, B60T 8/34, B60T 8/36, B60T 8/40, B60T 13/12, B60T 13/14, B60T 13/66, B60T 13/74, B60T 15/04, B60T 11/20, B60T 11/21, B60T 11/22, B62D 11/00, B62D 11/02, B62D 11/06, B62D 11/08

(54) **IMPROVED BOOSTED BRAKE CONTROL HYDRAULIC ARRANGEMENT FOR WORK VEHICLES**
VERBESSERTE HYDRAULISCHE ANORDNUNG FÜR DIE STEUERUNG EINES BREMSKRAFTVERSTÄRKERS FÜR ARBEITSFAHRZEUGE
AGENCEMENT HYDRAULIQUE AMÉLIORÉ DE COMMANDE DE SERVOFREIN POUR VÉHICULES DE TRAVAIL

(30) Priority: 26.05.2020 IT 202000012421
(43) Date of publication of application: 03.05.2023
(73) Proprietor: CNH Industrial Italia S.p.A., 10156 Torino (IT)
(72) Inventor: PASINI, Gianpaolo, 41100 Modena (IT); CIARROCCHI, Marco, Pietro, 64027 Sant'Omero (TE) (IT)
(74) Representative: CNH Industrial IP Department
(86) International application number: PCT/EP2021/063982
(87) International publication number: WO 2021/239780

(56) References cited:
- EP-A1- 2 337 721
- EP-A1- 3 023 310
- EP-A1- 3 604 056
- IT-A1- MO20 060 213
- US-A1- 2006 097 565
- US-A1- 2013 038 118
- US-A1- 2017 240 151
- US-B2- 9 090 239

## Description

### TECHNICAL FIELD

The present invention concerns a brake control hydraulic arrangement, in particular a boosted brake control hydraulic arrangement for master brake cylinders of work vehicles, such as agricultural vehicles.

### BACKGROUND OF THE INVENTION

All vehicles are provided with brakes and, as known, work vehicles such as agricultural vehicles are provided with main brakes on rear wheels of the vehicle that can be actuated hydraulically e.g. thanks to dedicated master brake cylinders.

US20137038118A1, US9090239B2, US2006/097565A1 all disclose examples of such arrangement.

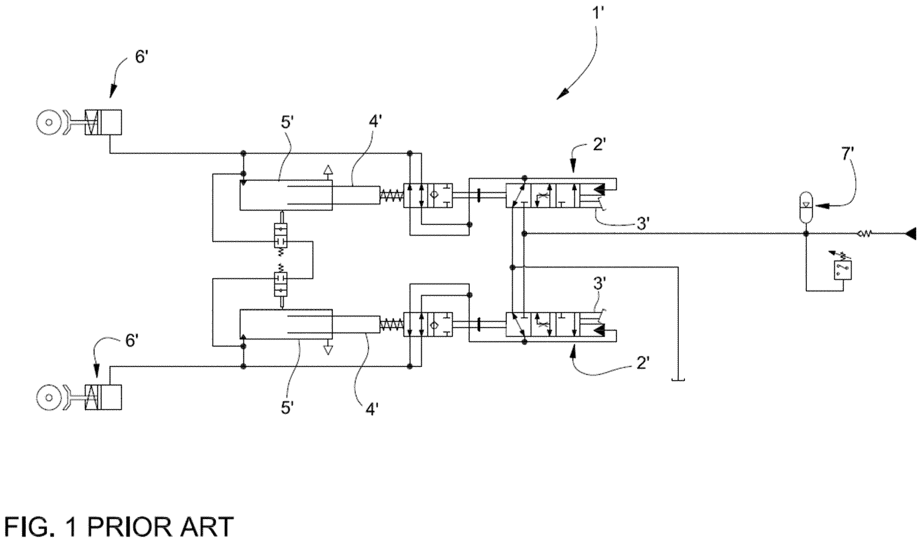

Figure 1 discloses an exemplarily embodiment of rear brakes control hydraulic arrangement 1' as known in the art. Briefly, such arrangement 1' comprises a brake actuation valve 2' configured to be actuated by a respective pedal 3' by the user of the work vehicle. Such brake actuation valve 2' is configured to move a piston 4' making part of a master brake cylinder 5' which consequently push a high pressure fluid into a respective brake 6'.

In order to facilitate the pushing operation of the pedal 3' by the user of the work vehicle, it is known to hydraulically connect a source of fluid in pressure 7' to the brake actuation valve 2' so that the greater is the pushing on the pedal 3', the greater fluid in pressure helps the movement of the brake actuation valve 2' to actuate the master brake cylinder 5'.

The above synthetically defined arrangement is known as boosted master brake cylinder configuration and it is widely used in work vehicle to assist the operator when braking the vehicle.

However, work vehicles such as agricultural vehicles are more and more improved to achieve a plurality of autonomous functions such as braking that would be desired to be controlled remotely.

Morevoer, the known layout as the one described in figure 1 cannot achieve a remote control of the braking, since they need the operator that presses the pedal for activating the master brake cylinders.

Furthermore, a very different layout without using master brake cylinders would have very high costs and would need a total reconfiguration of the hydraulic layout of the brakes and, in general, of the hydraulic of the work vehicle.

Therefore, the need is felt to provide a hydraulic arrangement configured to allow the a remote control of the master brake cylinders for rear brakes.

An aim of the present invention is to satisfy the above mentioned needs in an economic and optimized way.

### SUMMARY OF THE INVENTION

The aforementioned aim is reached by a hydraulic arrangement and a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a hydraulic arrangement as known in the prior art;
- Figure 2 is a schematic representation of a first embodiment of a hydraulic arrangement according to the present invention; and
- Figure 3 is a schematic representation of a second embodiment of a hydraulic arrangement according to the present invention.

### DETAILED DESCRIPTION OF THE INVENTION

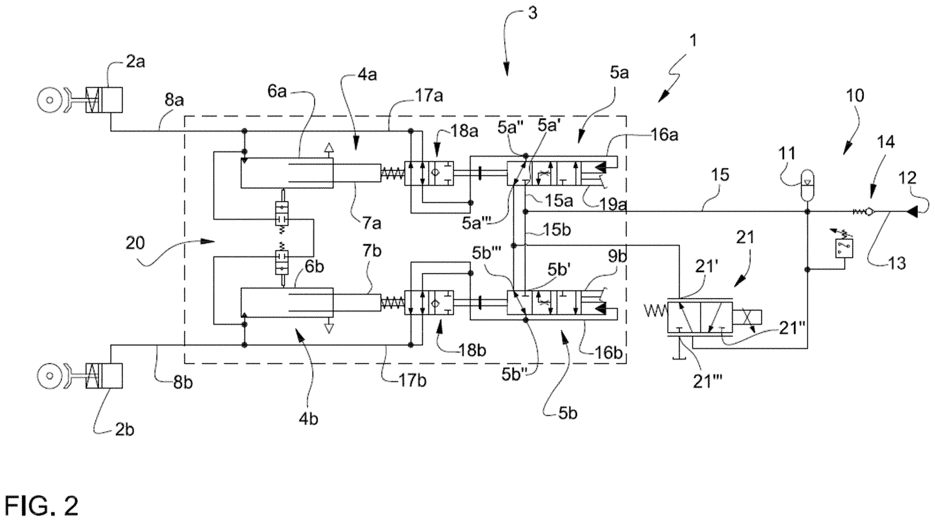

In figure 2 reference number, 1 generically discloses a hydraulic arrangement according to the present invention and configured to control the actuation of rear brakes 2a, 2b of a work vehicle, not shown. In particular, the hydraulic arrangement 1 is configured to control a rear left brake 2a and a rear right brake 2b of the work vehicle.

Hydraulic arrangement 1 comprises a master brake cylinder module 3 preferably comprising a master brake cylinder 4a, 4b for each of the rear brake 2a, 2b and a respective actuation valve 5a, 5b for each of such master brake cylinders 4a, 4b.

In the following, since the disclosed exemplarily master brake cylinder module 3 comprises the same elements for left rear brake 2a and right rear brake 2b, only the elements for operating the left rear brake 2a will be described, assuming the index "a" together the reference number. The same elements with index "b" are present for operating the right rear brake 2b.

The master brake cylinder 4a comprises a housing 6a and a piston 7a configured to slide inside the housing 6a that is further configured to house fluid in pressure. The housing 6a is fluidly connected via a conduit 8a to the left rear brake 2a. Indeed a motion of the piston 7a inside the housing 6a tends to push away through conduit 8a the fluid in pressure thereby activating the left rear brake 2a.

The piston 7a is mechanically connected to actuation valve 5a so that its motion corresponds to a motion of actuation valve 5a. This latter is actuated by a pedal 9a so that the user, by pushing the pedal 9a, can move the actuation valve 5a thereby inserting the piston 7a into the housing 6a.

In order to provide the aforementioned boost function to actuation valve 5a, hydraulic arrangement 1 further comprises a source 10 of fluid in pressure fluidly connected to valve 5a. It should be noted that in the disclosed embodiment the source 10 comprises a single accumulator 11 but it's clear that the source may be separated for each left and right rear brake 2a, 2b or may be provided with a different and more complex hydraulic arrangement.

The accumulator 11 is fluidly connected to a source of fluid in pressure 12 of the work vehicle, e.g. a pump, via a conduit 13 into which it is interposed a check valve 14 to avoid contrary passage of fluid from circuit 1 to the source 12.

As said, the source 10 is fluidly connected to a first port 5a' of actuation valve 5a via a conduit 15; indeed it's separated then into two branches 15a, 15b to be connected to each actuation valve 5a, 5b.

Moreover, a second port 5a" actuation valve 5a is fluidly connected via a conduit 16a to allow a hydraulic signal to exert a hydraulic pressure, in parallel to mechanical pedal 9a. Such hydraulic signal is selectively connected by connecting the second port 5a" to the first port 5a' of actuation valve 5a, as described below. In particular. As clearly shown, the hydraulic signal can vary from zero in a first position of the actuation valve 5a to a maximum value in a further position of the actuation valve 5a.

Furthermore, second port 5a'', i.e. conduit 16a, may further be fluidly connected to output conduit 8a of housing 6a of master bake cylinder 4a via a related conduit 17a. In particular and preferably, the hydraulic arrangement 1 comprises an intermediate valve 18a rigidly carried by actuation valve 5a configured to allow the passage of fluid between the actuation valve 5a and the housing 16a in both directions or to allow the passage of such fluid in only one direction, e.g. from actuation valve 5a to housing 16.

More preferably, the conduit 17a comprises a central portion into which is divided into two branches and the intermediate valve 18a is fluidly interposed between such branches. Accordingly, such intermediate valve 18a is a two-position four ways valve.

Furthermore, actuation valve 5a further defines a third port 5a‴ fluidly connected to discharge 19. According to the above-defined structure, actuation valve 5a is a three ways proportional valve. In particular actuation valve 5a can assume at least a first position into which the second port 5a'' is connected to its third port 5a''' and a second position into which the second port 5a'' is fluidly connected to the first port 5a'.

As per se known, hydraulic arrangement 1 further comprises balancing means 20 fluidly interposed between the housings 6a of the master cylinders 4a, 4b and here not described in detail for sake of brevity.

According to the invention, the hydraulic arrangement 1 comprises a remote actuation valve 21 fluidly interposed between the source 10 of fluid in pressure, the discharge 19 and each of the actuation valves 5a, 5b.

In particular, the remote actuation valve 21 defines a first port 21' configured to be fluidly connected to third port of actuation valves 5a, 5b, a second port 21", fluidly connected to the source 10 of fluid in pressure and a third port 21‴ configured to be fluidly connected to discharge 19.

Valve 21 is configured, in an active condition, to fluidly connect the third ports 5a‴, 5b‴ of the actuation valves 5a, 5b to discharge 19 and in a rest condition to fluidly connect these latter to the source 10 of fluid in pressure.

Advantageously, valve 21 is an electro-actuated valve and, preferably, a proportional three-ways valve.

The operation of the above-described embodiment according to the invention is the following.

A first possible mode of operation can be a standard operation into which valve 21 is activated and therefore allows direct connection of actuation valves 5a, 5b to discharge 19.

In such working mode the user of the work vehicle may press the related pedal 9a, 9b thereby starting the compression of piston 7a, 7b into housing 6a, 6b and then the passage of fluid towards brakes 2a, 2b. During the compression, a portion of the fluid from housing is sent to the conduit 16a, 16b to generate the hydraulic signal which exerts a pressure in parallel to the pedal 9a, 9b;furthermore, the passage of fluid from first port 5a‴, 5b"" to discharge 19 is more and more restricted while the it is fluidly connected to source 10 via conduit 15a, 15b so that also the fluid in pressure coming from conduit 15 strength the hydraulic signal acting in parallel to pedal 9a, 9b. In this way, the pressure needed on pedal 9a, 9b is lower because the pressure coming from the hydraulic signal in conduit 16a helps the user while pressing pedal 9a, 9b.

When the user stops to push on the pedal 9a, 9b, the force of fluid in pressure in housing 6a, 6b push away the piston 7a, 7b thereby restoring the initial fluid connections of first port 5a', 5b' and third port 5a‴, 5b‴. In such way, since third port 5a‴ is connected to discharge it is closed the passage with the source of fluid 10, any possible residual fluid present into conduit 17a, 17b or 16, 16b are discharged to discharge 19 so that the related brake 2a, 2b is totally unbraked.

A second possible mode of operation is an electric or a remote mode achieved thanks to valve 21. As said, valve 21 during the above described mode of operation is always energized. If de-energized, the valve 21 allows the passage of fluid from source 10 third port 5a‴, 5b‴ thereby generating a hydraulic pressure through conduit 16a, 16b to actuation valve 5a, 5b. In particular, such hydraulic pressure substitutes the initial pedal pressure which is needed to start the boost effect which is further given by the fluid coming from master cylinder 4a, 4b and then from second port 5a'', 5b''', as described above.
It should be noted that until the valve 21 is positioned in such limit activated state, the fluid in pressure acts on the third port 5a‴, 5b‴ thereby avoiding any connection with the discharge 19 of conduits 16a, 16b and 17a, 17b. In such way, the braking is maintained till it is desired. It is clear that the represented valve 21 is a proportional valve and that the above described operation is a limit one. In normal operation the valve 21 subdivide the flow between the above two described limit conditions.

In order to unbrake the brakes 2a, 2b it is sufficient to energize valve 21 again thereby connecting again third port 5a‴, 5b‴ to discharge 19 and, then, allowing actuation valve 5a, 5b to return back to its original position.

In case of malfunctioning of valve 21, e.g. a loss of electrical power on the vehicle, the rest position will restore the braked position, thereby guaranteeing a fail safe activation of the rear brakes 2a, 2b.

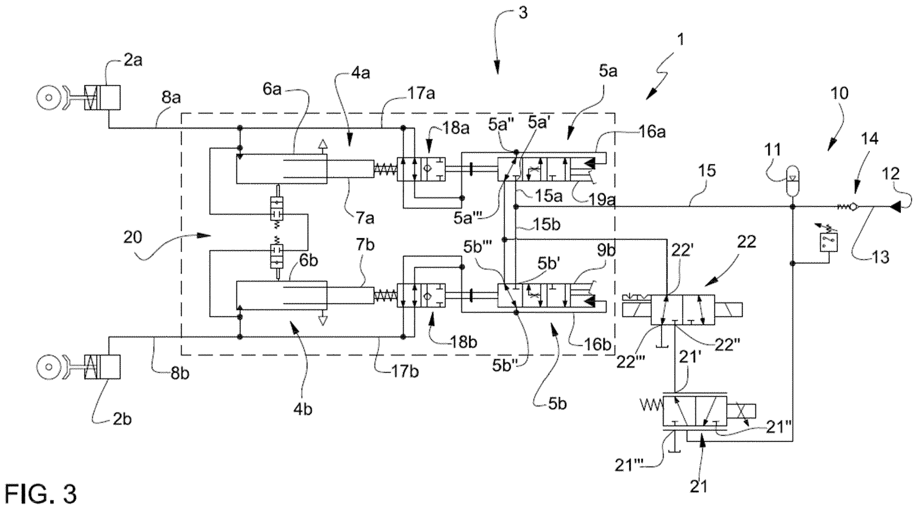

Figure 3 discloses a second embodiment of the hydraulic arrangement 1 of the present invention that is similar to the embodiment of figure 2 except for the fact that the actuation of remote control valve 21 is different and that they hydraulic arrangement comprising a second remote control valve 22 fluidly interposed between the first remote control valve 21 and the actuation valves 5a, 5b.

In particular, second valve 22 defines a first port 22' configured to be fluidly connected to third port of actuation valves 5a, 5b, a second port 21" fluidly connected to second port of first valve 21 and a third port 21‴ configured to be fluidly connected to discharge 19.

First remote control valve 21 is again an electro-actuated valve and, preferably, a proportional three-ways valve but its first port 21' is connected, as said, to second port 22'' of valve 22. Differently from the first embodiment, valve 21 is configured, in active rest condition the first port 21' is connected to second port 22' of second valve 22 to the source 10 of fluid in pressure and in an active condition to fluidly connect second port 22' of second valve 22 to discharge 19.

Second valve 22 is a bi-stable valve with mechanical detent and preferably an electro-actuated valve. According to the above second valve is a three ways-two positions bi-stable valve. In a first position of second valve 22, the first port 22' if directly connected to its third port 22‴ while the second port 22" is closed and in a second position of second valve 22, the first port 22' if directly connected to its second port 22' while the third port 22‴ is closed

The operation of the hydraulic arrangement 1 according to the second embodiment described above is the following.

When second valve 22 is in its first position, the hydraulic arrangement can be used only by mechanically pressing the pedal 9a, 9b independently by the status of valve 21. When instead second valve 22 is in its second position, the hydraulic arrangement can be used in function of the status of valve 21 similarly to the operation described for the first embodiment.

Due to the presence of the bi-stable valve 22 with detent in case of electrical failure:
- If the vehicle was unbraked, it will be braked since the valve 21 will restore its rest condition;
- If the vehicle was braked, it will be maintained braked.
- If the vehicle was in its mechanical control configuration, it will remain in such configuration.

In view of the foregoing, the advantages of the hydraulic arrangement 1 according to the invention are apparent.

Thanks to the use of the first control remote valve 21 it is possible to provide a remote control of the hydraulic arrangement 1 without user intervention while, at the same time, allowing always a on-board user control of the brakes, if needed, thanks to the pedals 9a, 9b.

Anyway, such remote control given by remote valve 21 may be implemented in a cost-effect way on existing master brake cylinder modules without substantially changes to the piping or to the disposition of the main elements.

Accordingly, the proposed system is particularly economic, compact and can be implemented on different typologies of hydraulic arrangement.

Furthermore, as said, the use of the remote valve 21 is intrinsically fail-safe with respect to electrical failures of the work vehicle.

Moreover, the use of a second remote valve 22 allows to use a rest "non-activated" state of first remote valve 21, thereby reducing the electrical power consumed by this latter.

Furthermore, the use of a second remote valve 22, in particular a bi-stable valve, allows a clear distinction between manual and remote use and creates a fail-safe and low consumption system for controlling in a versatile way the braking of the work vehicle.

It is clear that modifications can be made to the described hydraulic arrangement 1 which do not extend beyond the scope of protection defined by the claims.

For example, the second remote control valve 22, as said, is optional.

Furthermore, it is clear, as said in the description, that the master bake cylinder module 3, the actuation valve 5, the source of fluid in pressure 10, the intermediate valve 18 or the remote control valves 21, 22 can be of any typology suitable to accomplish their operation as claimed.

## Claims

1. Hydraulic arrangement (1) for controlling left and right rear brakes (2a, 2b) of a work vehicle comprising a master brake cylinder module (3) and a source (10; 12) of fluid in pressure, said master brake cylinder module (3) comprising:
- a master cylinder module (4a, 4b), connected to rear brakes (2a, 2b);
- an actuation valve (5a, 5b) for each of said right and left master cylinders (4a, 4b), said actuation valve (5a, 5b) controlling the fluid flow sent from said right and left master cylinders (4a, 4b) to said brakes (2a, 2b) in function of a force exerted on a pedal (9a, 9b);
each actuation valve (5a, 5b) comprises a first port (5a', 5b'), a second port (5a", 5b") and a third port (5a‴, 5b‴), , the first port being fluidly connected to said source (10; 12), the second port (5a'', 5b'') being fluidly to said actuation valve (5a, 5b) connected to exert a pressure on said actuation valve (5a, 5b) in addition to the force exerted on said pedal (9a, 9b), the third port (5a‴, 5b‴) being fluidly connected to a discharge (19),
each actuation valve (5a, 5b) being configured to pass between a first position into which said first port (5a', 5b') is fluidly connected to said third port (5a‴, 5b‴) and said second port (5a", 5b") is closed and a second position into which said first port (5a', 5b') is fluidly connected to said second port (5a", 5b") and said third port (5a''', 5b‴) is closed,
said hydraulic arrangement (1) is **characterized in that** it further comprises a remote control valve (21) fluidly interposed between said source (10; 12), said third port (5a‴, 5b‴) and the discharge (19) and being configured to assume a first position into which it allows the fluidic connection between said source (10; 12) and said third port (5a‴, 5b‴) and a second position into which it allows the fluidic connection between said discharge (19) and said third port (5a‴, 5b‴).

2. Hydraulic arrangement according to claim 1, wherein said remote control valve (21) is an electro actuated valve.

3. Hydraulic arrangement according to claim 1 or 2, wherein said remote control valve (21) is a proportional valve.

4. Hydraulic arrangement according to any of the preceding claims, wherein said remote control valve (21) needs to be electrically actuated to maintain said second position.

5. Hydraulic arrangement according to any of the claims 1 to 3, wherein said remote control valve (21) needs to be electrically actuated to maintain said first position and wherein said hydraulic arrangement (1) comprises a further remote control valve (22) fluidly interposed between said remote control valve (21), said third port (5a‴, 5b‴) and the discharge (19) and being configured to assume a first position into which it allows the fluidic connection between said remote control valve (21) and said third port (5a‴, 5b‴) and a second position into which it allows the fluidic connection between said discharge (19) and said third port (5a‴, 5b‴).

6. Hydraulic arrangement according to claim 5, wherein said further remote control valve (22) is an electro actuated valve.

7. Hydraulic arrangement according to claim 5 or 6, wherein said further remote control valve (22) is a bi-stable valve.

8. Hydraulic arrangement according to claim 7, wherein said further remote control valve (22) comprises a detent.

9. Hydraulic arrangement according to any of the preceding claims, further comprising an intermediate valve (18a, 18b) for each of said actuation valve (5a, 5b) and fluidly interposed between said conduit (16a, 16b) fluidly connecting said second port (5a",5b") to said actuation valve (5a, 5b) and said conduit (8a, 8b) fluidly connecting each master cylinder (4a, 4b) to said brakes (2a, 2b), said intermediate valve (18a, 18b) being configured to allow the passage of fluid in both direction between said conduits (8a, 8b; 16a, 16b) or to allow the passage of fluid only from said actuation valve (5a, 5b) towards the rear brakes (2a, 2b).

10. Work vehicle comprising rear brakes (2a, 2b) for braking said work vehicle, a source (12) of fluid in pressure and a hydraulic arrangement (1) according to any of the preceding claims for controlling said rear brakes (2a, 2b).

## Patentansprüche

1. Hydraulikanordnung (1) zum Steuern einer linken und einer rechten hinteren Bremse (2a, 2b) eines Arbeitsfahrzeugs mit einem Hauptbremszylindermodul (3) und einer Quelle (10; 12) von unter Druck stehendem Fluid, wobei das Hauptbremszylindermodul (3) umfasst:
- ein Hauptzylindermodul (4a, 4b), das mit den hinteren Bremsen (2a, 2b) verbunden ist;
- ein Betätigungsventil (5a, 5b) für jeweils den rechten und den linken Hauptzylinder (4a, 4b), wobei das Betätigungsventil (5a, 5b) den Fluidfluss steuert, der von dem rechten und dem linken Hauptzylinder (4a, 4b) in Abhängigkeit von einer auf ein Pedal (9a, 9b) ausgeübten Kraft zu den Bremsen (2a, 2b) gefördert wird;
wobei jedes Betätigungsventil (5a, 5b) einen ersten Anschluss (5a', 5b'), einen zweiten Anschluss (5a", 5b") und einen dritten Anschluss (5a‴, 5b‴) aufweist, wobei der erste Anschluss mit der Quelle (10; 12) fluidisch verbunden ist, der zweite Anschluss (5a", 5b") mit dem Betätigungsventil (5a, 5b) fluidisch verbunden ist, um zusätzlich zu der auf das Pedal (9a, 9b) ausgeübten Kraft einen Druck auf das Betätigungsventil (5a, 5b) auszuüben, und der dritte Anschluss (5a‴, 5b‴) mit einer Ableitung (19) fluidisch verbunden ist,
wobei jedes Betätigungsventil (5a, 5b) dazu eingerichtet ist, zwischen einer ersten Position, in der der erste Anschluss (5a', 5b') mit dem dritten Anschluss (5a‴, 5b‴) fluidisch verbunden ist und der zweite Anschluss (5a", 5b") geschlossen ist, und einer zweiten Position, in der der erste Anschluss (5a', 5b') mit dem zweiten Anschluss (5a", 5b") fluidisch verbunden ist und der dritte Anschluss (5a‴, 5b‴) geschlossen ist, überführt zu werden,
wobei die Hydraulikanordnung (1) **dadurch gekennzeichnet ist, dass** sie des Weiteren ein ferngesteuertes Ventil (21) aufweist, das zwischen der Quelle (10; 12), dem dritten Anschluss (5a‴, 5b‴) und der Ableitung (19) fluidisch eingefügt ist und dazu eingerichtet ist, eine erste Position, in der es die fluidische Verbindung zwischen der Quelle (10; 12) und dem dritten Anschluss (5a‴, 5b‴) ermöglicht, und eine zweite Position, in der es die fluidische Verbindung zwischen der Ableitung (19) und dem dritten Anschluss (5a‴, 5b‴) ermöglicht, einzunehmen.

2. Hydraulikanordnung nach Anspruch 1, wobei das ferngesteuerte Ventil (21) ein elektrisch betätigtes Ventil ist.

3. Hydraulikanordnung nach Anspruch 1 oder 2, wobei das ferngesteuerte Ventil (21) ein Proportionalventil ist.

4. Hydraulikanordnung nach einem der vorhergehenden Ansprüche, wobei das ferngesteuerte Ventil (21) elektrisch betätigt sein muss, um die zweite Position aufrechtzuerhalten.

5. Hydraulikanordnung nach einem der Ansprüche 1 bis 3, wobei das ferngesteuerte Ventil (21) elektrisch betätigt sein muss, um die erste Position aufrechtzuerhalten, und wobei die Hydraulikanordnung (1) ein weiteres ferngesteuertes Ventil (22) aufweist, das zwischen dem ferngesteuerten Ventil (21), dem dritten Anschluss (5a‴, 5b‴) und der Ableitung (19) fluidisch eingefügt ist und dazu eingerichtet ist, eine erste Position, in der es die fluidische Verbindung zwischen dem ferngesteuerten Ventil (21) und dem dritten Anschluss (5a‴, 5b‴) ermöglicht, und eine zweite Position, in der es die fluidische Verbindung zwischen der Ableitung (19) und dem dritten Anschluss (5a‴, 5b‴) ermöglicht, einzunehmen.

6. Hydraulikanordnung nach Anspruch 5, wobei das weitere ferngesteuerte Ventil (22) ein elektrisch betätigtes Ventil ist.

7. Hydraulikanordnung nach Anspruch 5 oder 6, wobei das weitere ferngesteuerte Ventil (22) ein bistabiles Ventil ist.

8. Hydraulikanordnung nach Anspruch 7, wobei das weitere ferngesteuerte Ventil (22) eine Sperre aufweist.

9. Hydraulikanordnung nach einem der vorhergehenden Ansprüche, die des Weiteren ein Zwischenventil (18a, 18b) für jedes Betätigungsventil (5a, 5b) aufweist, das zwischen der Leitung (16a, 16b), die den zweiten Anschluss (5a", 5b") mit dem Betätigungsventil (5a, 5b) fluidisch verbindet, und der Leitung (8a, 8b) fluidisch eingefügt ist, die jeden Hauptzylinder (4a, 4b) mit den Bremsen (2a, 2b) fluidisch verbindet, wobei das Zwischenventil (18a, 18b) dazu eingerichtet ist, den Durchfluss von Fluid zwischen den Leitungen (8a, 8b; 16a, 16b) in beide Richtungen zu erlauben oder den Durchfluss von Fluid nur von dem Betätigungsventil (5a, 5b) in Richtung der hinteren Bremsen (2a, 2b) zu erlauben.

10. Arbeitsfahrzeug mit hinteren Bremsen (2a, 2b) zum Bremsen des Arbeitsfahrzeugs, einer Quelle (12) von unter Druck stehendem Fluid und einer Hydraulikanordnung (1) nach einem der vorhergehenden Ansprüche zum Steuern der hinteren Bremsen (2a, 2b).

## Revendications

1. Dispositif hydraulique (1) permettant de commander les freins arrière gauche et droit (2a, 2b) d'un véhicule de travail comprenant un module de maîtres-cylindres de frein (3) et une source (10 ; 12) de fluide sous pression, ledit module de maîtres-cylindres de frein (3) comprenant :
- un module de maîtres-cylindres (4a, 4b) raccordé aux freins arrière (2a, 2b) ;
- une valve de commande (5a, 5b) pour chacun desdits maîtres-cylindres droit et gauche (4a, 4b), ladite valve de commande (5a, 5b) contrôlant le débit de fluide circulant desdits maîtres-cylindres droit et gauche (4a, 4b) vers lesdits freins (2a, 2b) en fonction d'une force exercée sur une pédale (9a, 9b) ;
chaque valve de commande (5a, 5b) comprend un premier orifice (5a', 5b'), un deuxième orifice (5a‴, 5b‴) et un troisième orifice (5a‴, 5b‴), le premier l'orifice étant raccordé fluidiquement à ladite source (10 ; 12), le deuxième orifice (5a", 5b") étant raccordé fluidiquement à ladite valve de commande (5a, 5b) pour exercer une pression sur ladite valve de commande (5a, 5b) en plus de la force exercée sur ladite pédale (9a, 9b), le troisième port (5a‴, 5b‴) étant raccordé fluidiquement à une évacuation (19),
chaque valve de commande (5a, 5b) étant configurée pour passer d'une première position dans laquelle ledit premier orifice (5a', 5b') est raccordé fluidiquement audit troisième orifice (5a‴, 5b‴) et ledit deuxième orifice (5a", 5b") est fermé et une seconde position dans laquelle ledit premier orifice (5a', 5b') est raccordé fluidiquement audit deuxième orifice (5a", 5b") et ledit troisième orifice (5a‴, 5b‴) est fermé,
ledit agencement hydraulique (1) est **caractérisé en ce qu'**il comprend en outre une vanne de régulation à distance (21) interposée fluidiquement entre ladite source (10 ; 12), ledit troisième orifice (5a‴, 5b‴) et la décharge (19) et étant configuré pour prendre une première position dans laquelle il permet le raccordement fluidique entre ladite source (10 ; 12) et ledit troisième orifice (5a‴, 5b‴) et une seconde position dans laquelle il permet le raccordement fluidique entre ladite décharge (19) et ledit troisième orifice (5a‴, 5b‴).

2. Dispositif hydraulique selon la revendication 1, dans lequel ladite vanne de régulation à distance (21) est une vanne à actionnement électrique.

3. Dispositif hydraulique selon la revendication 1 ou la revendication 2, dans lequel ladite vanne de régulation à distance (21) est une vanne proportionnelle.

4. Dispositif hydraulique selon l'une quelconque des revendications précédentes, dans lequel ladite vanne de régulation à distance (21) doit être actionnée électriquement pour maintenir ladite seconde position.

5. Dispositif hydraulique selon l'une quelconque des revendications 1 à 3, dans lequel ladite vanne de régulation à distance (21) doit être actionnée électriquement pour maintenir ladite première position et dans lequel ledit dispositif hydraulique (1) comprend une autre vanne de régulation à distance (22) interposé fluidiquement entre ladite vanne de régulation à distance (21), ledit troisième orifice (5a‴, 5b‴) et la décharge (19) et étant configuré pour prendre une première position dans laquelle il permet le raccordement fluidique entre ladite vanne de régulation à distance (21) et ledit troisième orifice (5a‴, 5b‴) et une seconde position dans laquelle il permet le raccordement fluidique entre ladite décharge (19) et ledit troisième orifice (5a‴, 5b‴).

6. Dispositif hydraulique selon la revendication 5, dans lequel ladite autre vanne de régulation à distance (22) est une vanne à actionnement électrique.

7. Dispositif hydraulique selon la revendication 5 ou la revendication 6, dans lequel ladite autre vanne de régulation à distance (22) est une vanne bistable.

8. Dispositif hydraulique selon la revendication 7, dans lequel ladite autre vanne de régulation à distance (22) comprend un mécanisme d'arrêt.

9. Dispositif hydraulique selon l'une quelconque des revendications précédentes, comprenant en outre une valve intermédiaire (18a, 18b) pour chacune desdites valves de commande (5a, 5b) et interposée fluidiquement entre lesdits conduits (16a, 16b) raccordant fluidiquement ledit deuxième orifice (5a", 5b") auxdites valves de commande (5a, 5b) et auxdits conduits (8a, 8b), raccordant fluidiquement chacun des maîtres-cylindres (4a, 4b) auxdits freins (2a, 2b), ladite valve intermédiaire (18a, 18b) étant configurée pour permettre le passage de fluide dans les deux sens entre lesdits conduits (8a, 8b ; 16a, 16b) ou pour permettre le passage de fluide uniquement de ladite valve de commande (5a, 5b) vers les freins arrière (2a, 2b).

10. Véhicule de travail comprenant des freins arrière (2a, 2b) pour freiner ledit véhicule de travail, une source (12) de fluide sous pression et un dispositif hydraulique (1) selon l'une quelconque des revendications précédentes pour commander lesdits freins arrière (2a, 2b).
